# EUROPÄISCHE PATENTSCHRIFT

(11) **EP 2 606 800 B1**
(45) Veröffentlichungstag und Bekanntmachung des Hinweises auf die Patenterteilung: **22.05.2019**
(21) Anmeldenummer: 12197738.3
(22) Anmeldetag: 18.12.2012
(51) Int. Cl.: A47L 9/16, B01D 45/04

(54) **Staubabscheidevorrichtung**
Dust separation device
Dispositif de coupe de la poussière

(30) Priorität: 19.12.2011 DE 102011089059
(43) Veröffentlichungstag der Anmeldung: 26.06.2013
(73) Patentinhaber: BSH Hausgeräte GmbH, 81739 München (DE)
(72) Erfinder: Bräuning, Andre, 98587 Steinbach-Hallenberg (DE); Seith, Thomas, 97616 Bad Neustadt (DE)

(56) Entgegenhaltungen:
- EP-A1- 0 679 364
- US-A- 3 791 110
- US-A- 3 917 568

## Beschreibung

Ausführungsbeispiele der vorliegenden Erfindung befassen sich mit einer Staubabscheidevorrichtung und insbesondere mit einem tütenlosen Staubabscheidesystem.

Für tütenlose Staubabscheidesysteme in Staubsaugern werden oft sogenannte Standard-Zyklone verwendet, bei denen die Luft zunächst tangential in einen Zylinder eingeleitet wird. Dabei entsteht ein Drall entlang der Mantelfläche des Zylinders, so dass die Luft in Form einer Spirale zum Ausgang des Zylinders strömt. Eine dem Zylinder nachgeschaltete, sich in Form eines Kegels verjüngende Zone führt die mit Partikeln gefüllte verunreinigte Luft zu einer weit entfernten Öffnung eines Tauchrohrs im Inneren des kegeligen Bereiches, wo diese durch abrupte Umlenkung des Luftstroms von schwereren im Luftstrom enthaltenen Partikeln gereinigt wird. Das heißt, die schwereren Partikel werden von der leichteren Luftströmung getrennt und fallen durch eine am Ende des Trichters befindliche Öffnung in eine strömungsberuhigte Staubsammelbox, die sich unterhalb dieser Öffnung befindet. Das Tauchrohr im Inneren des Zyklons saugt die gereinigte Luft nach oben ab und sorgt dadurch auch für die abrupte Umlenkung der Luft im Kegelbereich, d. h. für die abrupte Bewegungsumkehr der Luft. Solche herkömmliche Lösungen haben den Nachteil, dass durch die verwendeten innenliegenden Tauchrohre mit prinzipbedingt geringem Querschnitt ein hoher Strömungsverlust auftritt, der mittels einer erhöhten Motorleistung kompensiert werden muss, was zu einer ungünstigen Gesamtenergiebilanz bei Verwendung von solchen Standardzyklon-Staubabscheidern führt.

Die Europäische Patentanmeldung EP 0 679 364 A1 beschreibt einen Staubsauger, bei dem zur Abscheidung von Grobschmutz vor einem Feinstaubfilter ein Zyklon verwendet wird, bei dem die Luft in einem inneren Zylinder in einer schraubenförmigen Bewegung in einen Schmutzsammelbehälter strömt, von wo aus sie über einen den inneren Zylinder umgebenden Luftkanal wieder abgesaugt wird. Dieser führt die von Grobschmutz gereinigte Luft zu einem Feinstaubfilter. Wenngleich bei dieser Lösung bei der Grobschmutzabscheidung vergleichsweise geringe Strömungsverluste auftreten können, wird die Energiebilanz durch den nachgeschalteten Feinstaubfilter wieder deutlich verschlechtert, da mittels der in der EP 0 679 364 gezeigten zylindrischen Anordnung nur grober Schmutz entfernt werden kann.

Das deutsche Patent DE 10 2005 026 692 B4 offenbart eine zylindrisch geformte Staubtrennvorrichtung für einen Staubsauger, einem von einer Wand der Staubtrennvorrichtung umgebenen Einlassrohr und Luftführungselementen, die sich von der Seitenwand der Staubtrennvorrichtung in Richtung Innenseite erstrecken.

Aus der deutschen Übersetzung DE 692 12 308 T2 der europäischen Patentschrift EP 0 579 792 B1 ist ein Trägheitsstaubkollektor bekannt, bei dem ein staubbeladenes Fluid durch eine konisch zulaufende Kegelstumpfstruktur, die durch eine Vielzahl von koaxial angeordneten Ringen definiert ist, geleitet wird.

Die internationale Offenlegungsschrift WO 87/06 155 A1 schließlich offenbart einen Feststoffabscheider, bei dem ein mit Feststoff beladenes Gas durch eine Abscheidekammer geleitet wird. Die Kammer weist zunächst einen sich in Strömungsrichtung konisch erweiternden und Öffnungen aufweisenden Abschnitt auf und geht dann in einen wieder trichterförmig zusammenlaufenden Abschnitt über, der abgeschiedenen Feststoff sammeln soll.

Weiter sind aus dem Stand der Technik die EP 0 679 364 A1, die US 3 791 110 A1 und die US 3 917 568 A1 bekannt, welche Staubabscheider mit einem Einlassrohr zum Zuführen einer verunreinigten Luft zu einem Abscheidevolumen in einer Einlassrichtung offenbaren.

In Anbetracht des bekannten Stands der Technik stellt sich die Aufgabe, eine Staubabscheidevorrichtung zur Abscheidung von feineren Staubpartikeln zu schaffen, zu deren Betrieb eine geringe Leistung erforderlich ist.

Die Lösung der gestellten Aufgabe gelingt durch einen Staubabscheider mit den Merkmalen des Anspruchs 1. Es sei bereits hier explizit darauf hingewiesen, dass die in sämtlichen Ansprüchen enthaltenen Bezugszeichen nicht zu einer einschränkenden Auslegung des Wortlauts der Ansprüche herangezogen werden sollen und dürfen. Deren implizite Verweise auf spezielle Ausführungsbeispiele der in den Ansprüchen definierten Gegenstände und Verfahren soll vielmehr lediglich das Verständnis des durch den Wortlaut der Ansprüche definierten Schutzumfangs erleichtern. Bei einem erfindungsgemäßen Staubabscheider mit einem Einlassrohr zum Zuführen einer verunreinigten Luft zu einem Abscheidevolumen in einer Einlassrichtung und einem das Einlassrohr zumindest teilweise konzentrisch umschließenden Auslassrohr zum Absaugen der Luft, welches sich entgegen der Einlassrichtung an das Abscheidevolumen anschließt, wird dies ermöglicht, indem sich das Abscheidevolumen in der Einlassrichtung kegelförmig verjüngt. Das heißt, die Absaugung wird entgegen herkömmlichen Zyklonen nicht mit einem Tauchrohr verhältnismäßig engen Querschnitts, sondern über ein das Einlassrohr umschließendes Volumen, welches einen großen Querschnitt aufweist, bewirkt. Dies führt zu einer deutlichen Verringerung der strömungsbedingten Verluste im Vergleich zu herkömmlichen Zyklonabscheidern.

Zusätzlich wird die Staubabscheidung innerhalb eines Abscheidevolumens vorgenommen, welches sich in der Einlassrichtung kegelförmig verjüngt, das also die Form eines Trichters aufweist. Dies führt, verglichen mit rein zylindersymmetrischen Lösungen zu einer hohen Abscheiderate, d. h. zu einem hohen Verhältnis von verunreinigenden Partikeln am Eingang der Staubabscheidevorrichtung und denjenigen am Ausgang der Staubabscheidevorrichtung. Gleichzeitig treten nur geringe Strömungsverluste auf, da das zur Absaugung verwendete Auslassrohr einen großen Querschnitt aufweist, insbesondere weil dieses das Einlassrohr umschließt und sich nicht innerhalb desselben befindet. Das heißt, bei einer Verkleinerung der geometrischen Abmessung bzw. des Durchmessers der Anordnung kann eine stark erhöhte Effizienz des Staubabscheiders erreicht werden.

Erfindungsgemäß weist das Einlassrohr einen sich in das Abscheidevolumen erstreckenden konischen Bereich eines sich in der Einlassrichtung kegelförmig verjüngenden Querschnittes oder einen sich in das Abscheidevolumen erstreckenden Übergangsbereich eines sich in der Einlassrichtung monoton vergrößernden Querschnittes auf. Hierdurch kann die Staubabscheidung verbessert werden.

Vorteilhafte Aus- und Weiterbildungen, welche einzeln oder in Kombination miteinander eingesetzt werden können, sind Gegenstand der abhängigen Ansprüche. Die Bezugszeichen in den Ansprüchen haben keine einschränkende Wirkung, sondern sollen lediglich deren Lesbarkeit verbessern.

Bei einer weiteren bevorzugten Ausführungsform der Erfindung erstreckt sich das Abscheidevolumen bzw. der das Abscheidevolumen bildende Körper zumindest teilweise in einen Staubsammelbehälter, der mit dem Abscheidevolumen bzw. einem Auslass desselben verbunden ist, und der dazu dient, die in dem Abscheidevolumen aus der Luft abgeschiedenen Verunreinigungen zu sammeln, bis diese entsorgt bzw. entleert werden.

Bei einigen weiteren bevorzugten Ausführungsbeispielen erstreckt sich das Einlassrohr mit einem konischen Bereich eines sich kegelförmig verjüngenden Querschnitts in das Abscheidevolumen hinein, was dazu führen kann, dass die Abscheideleistung durch eine gezielte Kanalisierung der Luftströmung ohne Erhöhung des Strömungswiderstands im Staubabscheider weiter erhöht werden kann.

Aus demselben Grund weist bei einigen Ausführungsbeispielen der Erfindung dieser konische Bereich des sich kegelförmig verjüngenden Querschnitts des Einlassrohrs einen oder mehrere Durchbrüche auf, die sich von dem Inneren des Einlassrohrs bis zu dem Abscheidevolumen erstrecken und die dazu führen, die Abscheideleistung zu verbessern, ohne signifikant den Strömungswiderstand zu erhöhen. Die Abscheideleistung kann erhöht werden, weil die effektive Fläche, an der eine Staubabscheidung stattfindet, vergrößert wird. Die Staubabscheidung findet häufig an den Orten der Bewegungsumkehr des Luftstromes statt. Die derart wirksame Fläche kann wiederum durch die Durchbrüche erhöht werden. Bei weiteren bevorzugten Ausführungsbeispielen erstreckt sich das Einlassrohr mit einem sich in Einlassrichtung monoton vergrößernden Querschnitt in das Abscheidevolumen, um durch einen gerichteten Übergang der Strömung in das Abscheidevolumen zu einer verbesserten Staubabscheidung zu führen. Zusätzlich wird dadurch die effektive für die Staubabscheidung wirksame Fläche vergrößert.

Die Ausführungsbeispiele der vorliegenden Erfindung ermöglichen es mit einfachen konstruktiven Mitteln, eine Staubabscheidevorrichtung mit hoher Abscheiderate bereitzustellen, die darüber hinaus äußerst strömungsgünstig ist, sodass diese mit einer vergleichsweise geringen Motorleistung betrieben werden kann, sodass trotz hoher Abscheideleistung ein energieeffizienter Staubabscheider zur Verfügung gestellt werden kann.

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
- Fig. 1: ein Ausführungsbeispiel eines Staubabscheiders;
- Fig. 2: ein weiteres Ausführungsbeispiel eines Staubabscheiders;
- Fig. 3: ein Ausführungsbeispiel eines Staubabscheiders mit modifizierter Einlassgeometrie;
- Fig. 4: ein weiteres Ausführungsbeispiel eines Staubabscheiders mit modifizierter Einlassgeometrie; und
- Fig. 5: ein weiteres Ausführungsbeispiel eines Staubabscheiders mit modifizierter Einlassgeometrie.

Bei der nachfolgenden Beschreibung bevorzugter Ausführungsformen der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

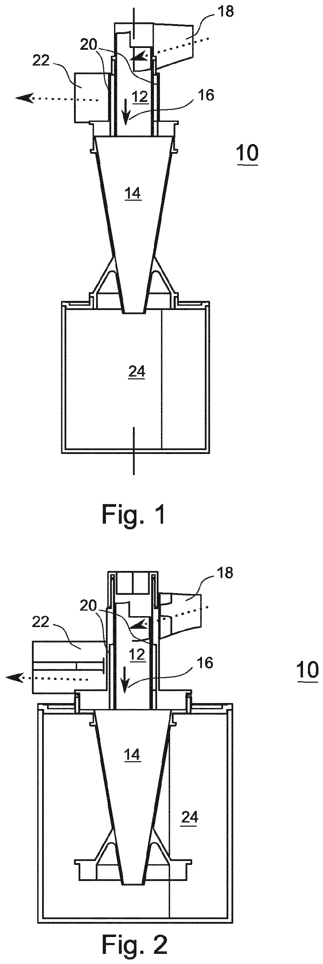

Fig. 1 zeigt ein Ausführungsbeispiel eines Staubabscheiders 10, der ein Einlassrohr 12 zum Zuführen einer verunreinigten Luft zu einem Abscheidevolumen 14 aufweist. In dem Einlassrohr 12 strömt die verunreinigte Luft in einer Einlassrichtung 16 in das Abscheidevolumen 14. Das Einlassrohr weist ferner einen derart gestalteten Lufteinlass 18 auf, dass die über den Lufteinlass 18 in das Einlassrohr 12 strömenden Luft eine Bewegungskomponente in der zur Einlassrichtung senkrechten tangentialen Richtung erhält. Als tangentiale Richtung ist vorliegend also die zu der Mantelfläche des zylindrischen Einlassrohrs 12 tangentiale Richtung zu verstehen. Durch die tangentiale Komponente bewegt sich der Luftstrom an den Außenwänden des Einlassrohrs 12 in einer schraubenförmigen Bewegung in das Abscheidevolumen 14. Aus dem Abscheidevolumen 14 wird die Luft über das Auslassrohr 20 abgesaugt, welches vorliegend das Einlassrohr 12 in dem sich an das Abscheidevolumen 14 angrenzenden Bereich konzentrisch umschließt.

Von der äußeren Mantelfläche des Einlassrohrs 12 und der inneren Mantelfläche des Auslassrohrs 20 wird also an der dem Abscheidevolumen 14 zugewandten Seite ein Ringspalt gebildet, durch den die Luft abgesaugt wird. Die effektive Fläche des Ringspalts bzw. die Fläche des das Einlassrohr 12 konzentrisch umschließende Auslassrohrs 20 ist deutlich größer als eine Fläche eines innerhalb des Einlassrohrs 12 gemäß dem Stand der Technik angebrachten Absaugrohrs bzw. Tauchrohrs, sodass mit den in den Fig. 1 bis 4 gezeigten Staubabscheidern eine strömungsgünstige, wenig Motorleistung verbrauchende Lösung zur Verfügung gestellt werden kann. Mit dem entgegen der Einlassrichtung 16 an das Abscheidevolumen 14 anschließenden Auslassrohr 20 wird also die Luft, die innerhalb des Abscheidevolumens 14 ihre Strömungsrichtung bzw. eine Komponente parallel zur Einlassrichtung 16 in eine Komponente entgegengesetzt zur Einlassrichtung 16 ändert, abgesaugt. Zu diesem Zweck kann beispielsweise einem Auslass 22 des Auslassrohrs nachgeschaltet ein hier der Einfachheit halber nicht gezeigter, einen Unterdruck erzeugender Elektromotor oder ähnliches angeordnet werden.

Wie in Fig. 1 dargestellt, schließt sich in der Einlassrichtung 16 an das Auslassrohr 20 ein sich in Einlassrichtung 16 kegelförmig verjüngendes Abscheidevolumen 14 an, innerhalb dessen die verunreinigte Luft zunächst in einer spiralartigen, in Einlassrichtung 16 verlaufenden Bahn nach unten wirbelt, um zumindest die ursprünglich in der Einlassrichtung 16 verlaufende Geschwindigkeitskomponente umzukehren und entgegen der Einlassrichtung 16 über das Auslassrohr 20 abgesaugt zu werden. Durch die der Luftströmung durch die sich verjüngende Kegelform des Abscheidevolumens aufgeprägte Ordnung bei dem Richtungsumkehr der Strömung kann die Abscheideleistung so weit verbessert werden, dass mittels der in Fig. 1 gezeigten Anordnung auch eine Feinstaubabscheidung, beispielsweise von Partikeln ≥ 50µm (oder kleiner, wie beispielsweise ≥ 5µm, ≥ 10µm oder ≥ 25µm), möglich ist.

In der Einlassrichtung 16 schließt sich an das Abscheidevolumen 14 ein Staubsammelbehälter 24 an, in dem der in dem Staubabscheider 10 bzw. in dem Abscheidevolumen 14 von der Luft getrennte Staub bzw. die von der Luft getrennten Verschmutzungen gesammelt werden können.

Es versteht sich von selbst, dass die Ausführungsbeispiele der Erfindung in verschiedensten Materialien, beispielsweise aus Plastik, metallischen Materialien oder dergleichen einstückig oder mehrteilig, im Fall von Plastik beispielsweise durch ein Spritzgussverfahren hergestellt werden können. Ferner versteht es sich von selbst, dass der Auslass 22 des Auslassrohrs 20 nicht, wie in Fig. 1 beispielshalber dargestellt, tangential zu dem zylindrischen Teil des Auslassrohrs 20 verlaufen muss. Vielmehr sind beliebige Geometrien für den Auslass 22 denkbar, beispielsweise auch eine Absaugung nach oben, also entgegen der Einlassrichtung 16.

Fig. 2 zeigt ein weiteres Ausführungsbeispiel der vorliegenden Erfindung, das in vielen Teilen mit dem in Fig. 1 gezeigten Ausführungsbeispiel übereinstimmt, auf deren erneute Darstellung der Einfachheit halber hier verzichtet wird. Vielmehr wird vorliegend auf die Unterschiede zwischen den beiden Staubabscheidern eingegangen, die sich darauf beschränken, dass bei dem in Fig. 2 gezeigten Ausführungsbeispiel das Abscheidevolumen 14 vollständig innerhalb des Staubsammelbehälters 24 angeordnet ist. Dies ermöglicht, das die Erhöhung der Abscheideleistung bewirkende sich kegelförmig verjüngende Abscheidevolumen in einem Staubabscheider einzubringen, ohne dass für die verbesserte Anordnung ein größerer Platzbedarf als bisher entsteht.

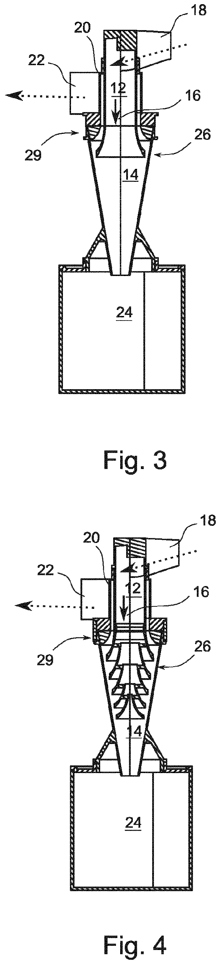

Das in Fig. 3 gezeigte Ausführungsbeispiel unterscheidet sich von den anhand der Fig. 1 und 2 diskutierten Ausführungsbeispielen dadurch, dass sich das Einlassrohr 12 in der Einlassrichtung 16 in das Abscheidevolumen 14 hinein erstreckt. In diesem Übergangsbereich 26, in dem sich das Einlassrohr 12 in das Abscheidevolumen 14 erstreckt, vergrößert sich ein Querschnitt des zylinderförmigen Einlassrohrs 12 kontinuierlich, d. h. monoton. Bei der in Fig. 3 gezeigten Kurvenform wird ein strömungsgünstiger Übergang des spiralförmig in Einlassrichtung 16 strömenden Luftstroms erreicht, was bei hoher Abscheideleistung zu einem geringen Strömungswiderstand beiträgt. Darüber hinaus kann die Abscheideleistung verbessert werden, wenn die effektive Fläche vergrößert wird, an der eine Abscheidung von Verschmutzungen aus der Luft stattfinden kann. Dies sind typischerweise Bereiche, an denen auf einer kurzen Weglänge eine Geschwindigkeitsumkehr des Luftstromes auftritt, wo also die Gradienten der Strömungsgeschwindigkeit der Luft groß sind. Bei dem in Figur 3 gezeigten Ausführungsbeispiel handelt es sich dabei um den dem Abscheidevolumen 14 zugewandten Rand des glockenförmigen Übergangsbereichs 26, welcher zu einer Erhöhung der effektiv wirksamen Fläche führt.

Bei dem in Figur 3 dargestellten Ausführungsbeispiel weist der Übergang vom Abscheidevolumen 14 zum Auslassrohr 20 ferner einen sich entgegen der Einlassrichtung kontinuierlich bis zum Durchmesser des Auslassrohrs 20 verjüngenden Anpassungsbereich 29 auf, der verhindern kann, dass sich vor dem Übergang in das Auslassrohr 20 turbulente Strömungen oder Wirbel bilden.

Figur 4 zeigt ein Ausführungsbeispiel, das auf dem in Figur 3 beschriebenen Ausführungsbeispiel basiert, wobei zur weiteren Vergrößerung der effektiv wirksamen Fläche innerhalb des Übergangsbereichs 26 eine Mehrzahl von in der Einlassrichtung 16 hintereinander angeordneten Strukturen mit sich in der Einlassrichtung 16 jeweils monoton vergrößernden Querschnitt angeordnet sind.

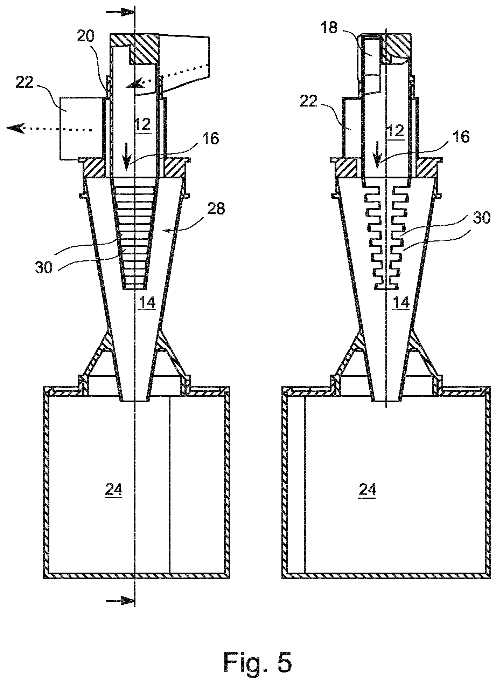

Figur 5 zeigt Schnittansichten durch 2 aufeinander senkrechte Ebenen eines weiteren Ausführungsbeispiels der Erfindung. Bei dem in Fig. 5 gezeigten Ausführungsbeispiel weist das Einlassrohr 12 einen sich in das Abscheidevolumen 14 erstreckenden konischen Bereich 28 eines sich in der Einlassrichtung 16 kegelförmig verjüngenden Querschnitts auf. Allein durch den konischen Bereich 28 kann die Abscheideleistung weiter verbessert werden, indem die Ordnung des Luftstromes im Abscheidevolumen 14 vergrößert wird.

Bei dem in Fig. 5 gezeigten Ausführungsbeispiel ist in dem konischen Bereich 28 eine Mehrzahl von Durchbrüchen bzw. Löchern 30 angeordnet, die sich von dem Innenvolumen des Einlassrohrs bis in das Abscheidevolumen 14 erstrecken und diese beiden Volumina miteinander verbinden. Dies kann eine Erhöhung der effektiv zur Abscheidung wirksamen Fläche bewirken, wobei es bei gleich bleibenden Strömungsverlusten zu einer Erhöhung der Abscheideleistung kommt.

Bei dem Ausführungsbeispiel von Fig. 5 sind die Mehrzahl der Durchbrüche im Einlassrohr 12 in der Einlassrichtung jeweils paarweise zueinander parallel angeordnet, wobei diese sich jeweils in Form eines geraden Ausschnitts über ein Segment des konischen Bereiches 28 erstrecken. Wenngleich in Figur 5 die Segmente, also die von den einzelnen Ausschnitten überstrichenen Winkelbereiche am Konus identisch sind, versteht es sich von selbst, dass bei weiteren Ausführungsbeispielen die Segmente auch unterschiedlich sein können. Diese können sowohl unterschiedliche Größe haben als auch relativ zueinander versetzt sowie schraubenförmig angeordnet sein.

Wenngleich anhand der vorhergehenden Ausführungsbeispiele überwiegend die Abscheidung von Feinstaub diskutiert wurde, versteht es sich von selbst, dass mittels weiterer Ausführungsbeispiele der Erfindung auf effiziente Art und Weise auch Grobverschmutzungen aus einem Luftstrom entfernt werden können, wenn die Geometrie der beteiligten Komponenten entsprechend angepasst wird.

Wenngleich anhand der vorhergehenden Ausführungsbeispiele eine Anordnung beschrieben wurde, bei der sich der Staubsammelbehälter 24 in der Einlassrichtung 16 an das Abscheidevolumen anschließt, versteht es sich ferner von selbst, dass bei alternativen Ausführungsbeispielen die geometrische Anordnung des Abscheidevolumens 14 relativ zu dem Staubsammelbehälter 24 auch anders sein kann, sofern ein Ausgang des Abschieidevolumens 14 mit dem Staubsammelbehälter 24 verbunden ist. Beispielsweise kann bei einer um 90° gedrehten Anordnung des Staubsammelbehälters ein Staubsammelbehälter mittels eines Verbindungskanals mit dem Auslass des Abscheidevolumens 14 verbunden werden, sodass sogar mehrere Abscheidevolumina mehrerer parallel angeordneter Staubabscheider mit einem einzigen Staubsammelbehälter verbunden sein können, der zum Entleeren des abgeschiedenen Schmutzes einer Mehrzahl von Staubabscheidern verwendet werden kann.

### Bezugszeichenliste

- 10: Staubabscheider
- 12: Einlassrohr
- 14: Abscheidevolumen
- 16: Einlassrichtung
- 18: Lufteinlass
- 20: Auslassrohr
- 22: Auslass
- 24: Staubsammelbehälter
- 26: Übergangsbereich
- 28: konischer Bereich
- 29: Anpassungsbereich
- 30: Durchbrüche

## Patentansprüche

1. Staubabscheider (10) mit folgenden Merkmalen:
einem Einlassrohr (12) zum Zuführen einer verunreinigten Luft zu einem Abscheidevolumen (14) in einer Einlassrichtung (16);
einem Lufteinlass (18) des Einlassrohrs (12), der so ausgebildet ist, dass die über den Lufteinlass (18) in das Einlassrohr (12) einströmende Luft eine Bewegungskomponente in einer zur Einlassrichtung (16) tangentialen Richtung erhält, sodass der Luftstrom sich auf einer schraubenförmigen Bahn zum Abscheidevolumen (14) hin bewegt; und
einem das Einlassrohr (12) zumindest teilweise konzentrisch umschließenden Auslassrohr (20) zum Absaugen der Luft, welches sich entgegen der Einlassrichtung (16) an das Abscheidevolumen (14) anschließt, wobei sich das Abscheidevolumen (14) in der Einlassrichtung (16) kegelförmig verjüngt,
**dadurch gekennzeichnet, dass** das Einlassrohr (12) einen sich in das Abscheidevolumen (14) erstreckenden konischen Bereich (28) eines sich in der Einlassrichtung (16) kegelförmig verjüngenden Querschnittes oder einen sich in das Abscheidevolumen (14) erstreckenden Übergangsbereich (26) eines sich in der Einlassrichtung (16) monoton vergrößernden Querschnittes aufweist.

2. Staubabscheider (10) nach Anspruch 1, **dadurch gekennzeichnet, dass** sowohl das Einlassrohr (12) als auch das Auslassrohr (20) in einem an das Abscheidevolumen (14) angrenzenden Bereich einen kreisförmigen Querschnitt aufweisen.

3. Staubabscheider (10) nach Anspruch 1 oder 2, **dadurch gekennzeichnet, dass** das Einlassrohr (12) einen sich in das Abscheidevolumen (14) erstreckenden konischen Bereich (28) eines sich in der Einlassrichtung (16) kegelförmig verjüngenden Querschnittes aufweist.

4. Staubabscheider (10) nach Anspruch 3, **dadurch gekennzeichnet, dass** das Einlassrohr (12) im konischen Bereich (28) einen oder mehrere Durchbrüche (30) aufweist, welche sich von einem Innenvolumen des Einlassrohres (12) bis zu dem Abscheidevolumen (14) erstrecken.

5. Staubabscheider (10) nach Anspruch 4, **dadurch gekennzeichnet, dass** das Einlassrohr (12) im konischen Bereich (28) mehrere in der Einlassrichtung parallel zueinander verlaufende Durchbrüche aufweist, die sich jeweils über ein Segment des konischen Bereiches (28) erstrecken.

6. Staubabscheider (10) nach einem der Ansprüche 1 oder 2, **dadurch gekennzeichnet, dass** das Einlassrohr (12) einen sich in das Abscheidevolumen (14) erstreckenden Übergangsbereich (26) eines sich in der Einlassrichtung (16) monoton vergrößernden Querschnittes aufweist.

7. Staubabscheider (10) nach Anspruch 6, **dadurch gekennzeichnet, dass** das Einlassrohr (12) einen sich in das Abscheidevolumen (14) erstreckenden Übergangsbereich (26) mit einer Mehrzahl von in der Einlassrichtung hintereinander angeordneten Strukturen mit sich in der Einlassrichtung (16) jeweils monoton vergrößernden Querschnitten aufweist.

8. Staubabscheider (10) nach einem der vorhergehenden Ansprüche, **dadurch gekennzeichnet, dass** der Staubabscheider (10) ferner einen mit dem Abscheidevolumen (14) verbundenen Staubsammelbehälter (24) aufweist, um eine in dem Abscheidevolumen (14) aus der Luft abgeschiedene Verunreinigung zu speichern.

9. Staubabscheider (10) nach Anspruch 8, **dadurch gekennzeichnet, dass** das Abscheidevolumen (14) zumindest teilweise innerhalb des Staubsammelbehälters (24) angeordnet ist.

10. Staubabscheider (10) nach einem der vorhergehenden Ansprüche, **dadurch gekennzeichnet, dass** das Einlassrohr (12) einen derart gestalteten Lufteinlass (16) aufweist, dass die über den Lufteinlass (16) in das Einlassrohr (12) strömende Luft eine Bewegungskomponente in einer zur Einlassrichtung (16) im Wesentlichen senkrechten tangentialen Richtung erhält, sodass die verunreinigte Luft in einer Spiralbahn entlang der Einlassrichtung (16) in das Abscheidevolumen (14) strömt.

## Claims

1. Dust separation device (10) with the following features:
an inlet pipe (12) for feeding contaminated air to a separation volume (14) in an inlet direction (16);
an air inlet (18) of the inlet pipe (12), which is embodied such that the air flowing in via the air inlet (18) into the inlet pipe (12) obtains a motion component in a direction tangential to the inlet direction (16), so that the air current moves on a helical path towards the separation volume (14); and
an outlet pipe (20), which at least partially concentrically encloses the inlet pipe (12), for drawing in the air, which connects to the separation volume (14) opposite the inlet direction (16), wherein the separation volume (14) tapers in a conical manner in the inlet direction (16),
**characterised in that** the inlet pipe (12) has a conical region (28), extending into the separation volume (14), of a cross-section which tapers in a conical manner in the inlet direction (16) or a transition region (26), extending into the separation volume (14), of a cross-section which enlarges in a monotonous manner in the inlet direction (16).

2. Dust separation device (10) according to claim 1, **characterised in that** both the inlet pipe (12) and the outlet pipe (20) have a circular cross-section in a region adjacent to the separation volume (14).

3. Dust separation device (10) according to claim 1 or 2, **characterised in that** the inlet pipe (12) has a conical region (28), extending into the separation volume (14), of a cross-section which tapers in a conical manner in the inlet direction (16).

4. Dust separation device (10) according to claim 3, **characterised in that** the inlet pipe (12) has one or more perforations (30) in the conical region (28), which extend from an inner volume of the inlet pipe (12) up to the separation volume (14).

5. Dust separation device (10) according to claim 4, **characterised in that** the inlet pipe (12) has a plurality of perforations which run in parallel with one another in the conical region (28) and extend over a segment of the conical region (28) in each case.

6. Dust separation device (10) according to one of claims 1 or 2, **characterised in that** the inlet pipe (12) has a transition region (26), extending into the separation volume (14), of a cross-section which enlarges in a monotonous manner in the inlet direction (16).

7. Dust separation device (10) according to claim 6, **characterised in that** the inlet pipe (12) has a transition region (26) extending into the separation volume (14) with a plurality of structures arranged successively in the inlet direction with cross-sections which enlarge in a monotonous manner in the inlet direction (16) in each case.

8. Dust separation device (10) according to one of the preceding claims, **characterised in that** the dust separation device (10) furthermore has a dust collection container (24) connected to the separation volume (14), in order to store contamination separated from the air in the separation volume (14).

9. Dust separation device (10) according to claim 8, **characterised in that** the separation volume (14) is at least partially arranged within the dust collection chamber (24).

10. Dust separation device (10) according to one of the preceding claims, **characterised in that** the inlet pipe (12) has an air inlet (16) which is shaped such that the air flowing into the inlet pipe (12) via the air inlet (16) obtains a motion component in a tangential direction which is substantially perpendicular to the inlet direction (16), so that the contaminated air flows on a spiral path along the inlet direction (16) into the separation volume (14).

## Revendications

1. Séparateur de poussière (10) comprenant les caractéristiques suivantes :
un tube d'entrée (12) destiné à amener un air souillé à un volume de séparation (14) dans une direction d'entrée (16) ;
une entrée d'air (18) du tube d'entrée (12), laquelle est réalisée de manière à ce que l'air affluant dans le tube d'entrée (12) par l'intermédiaire de l'entrée d'air (18) obtienne une composante de déplacement dans une direction tangentielle par rapport à la direction d'entrée (16), de sorte que le flux d'air se déplace vers le volume de séparation (14) sur une voie hélicoïdale ; et
un tube de sortie (20) entourant le tube d'entrée (12) de manière concentrique au moins en partie, destiné à aspirer l'air, lequel tube de sortie se raccorde au volume de séparation (14) en direction opposée à la direction d'entrée (16), le volume de séparation (14) se rétrécissant en forme de cône dans la direction d'entrée (16),
**caractérisé en ce que** le tube d'entrée (12) présente une zone conique (28), s'étendant dans le volume de séparation (14), d'une section se rétrécissant en forme de cône dans la direction d'entrée (16) ou une zone de transition (26), s'étendant dans le volume de séparation (14), d'une section s'agrandissant de manière monotone dans la direction d'entrée (16).

2. Séparateur de poussière (10) selon la revendication 1, **caractérisé en ce qu'**aussi bien le tube d'entrée (12) que le tube de sortie (20) présentent une section circulaire dans une zone adjacente au volume de séparation (14).

3. Séparateur de poussière (10) selon la revendication 1 ou 2, **caractérisé en ce que** le tube d'entrée (12) présente une zone conique (28), s'étendant dans le volume de séparation (14), d'une section se rétrécissant en forme de cône dans la direction d'entrée (16).

4. Séparateur de poussière (10) selon la revendication 3, **caractérisé en ce que** le tube d'entrée (12) présente dans la zone conique (28) un ou plusieurs passages (30) qui s'étendent d'un volume intérieur du tube d'entrée (12) jusqu'au volume de séparation (14).

5. Séparateur de poussière (10) selon la revendication 4, **caractérisé en ce que** le tube d'entrée (12) présente dans la zone conique (28) plusieurs passages s'étendant parallèlement les uns par rapport aux autres dans la direction d'entrée, lesquels s'étendent respectivement sur un segment de la zone conique (28).

6. Séparateur de poussière (10) selon l'une des revendications 1 ou 2, **caractérisé en ce que** le tube d'entrée (12) présente une zone de transition (26), s'étendant dans le volume de séparation (14), d'une section s'agrandissant de manière monotone dans la direction d'entrée (16).

7. Séparateur de poussière (10) selon la revendication 6, **caractérisé en ce que** le tube d'entrée (12) présente une zone de transition (26) s'étendant dans le volume de séparation (14), comprenant une pluralité de structures disposées les unes derrière les autres dans la direction d'entrée, ayant des sections s'agrandissant respectivement de manière monotone dans la direction d'entrée (16).

8. Séparateur de poussière (10) selon l'une quelconque des revendications précédentes, **caractérisé en ce que** le séparateur de poussière (10) présente en outre un bac collecteur de poussière (24) relié au volume de séparation (14) afin de stocker une saleté séparée de l'air dans le volume de séparation (14).

9. Séparateur de poussière (10) selon la revendication 8, **caractérisé en ce que** le volume de séparation (14) est disposé au moins en partie à l'intérieur du bac collecteur de poussière (24).

10. Séparateur de poussière (10) selon l'une quelconque des revendications précédentes, **caractérisé en ce que** le tube d'entrée (12) présente une entrée d'air (16) conçue de manière à ce que l'air affluant dans le tube d'entrée (12) par l'intermédiaire de l'entrée d'air (16) obtienne une composante de déplacement dans une direction tangentielle essentiellement verticale par rapport à la direction d'entrée (16), de sorte que l'air souillé afflue dans le volume de séparation (14) le long de la direction d'entrée (16) dans une voie en spirale.
